# EUROPEAN PATENT SPECIFICATION

(11) **EP 4 257 411 B1**
(45) Date of publication and mention of the grant of the patent: **16.07.2025**
(21) Application number: 22166866.8
(22) Date of filing: 06.04.2022
(51) Int. Cl.: B60L 5/16, B60L 50/53

(54) **CONTACT FORCE CONTROLLING IN A TROLLEY-ASSISTED MINING VEHICLE**
KONTAKTKRAFTSTEUERUNG IN EINEM WAGENGESTÜTZTEN BERGBAUFAHRZEUG
CONTRÔLE DE LA FORCE DE CONTACT DANS UN VÉHICULE MINIER ASSISTÉ PAR CHARIOT

(43) Date of publication of application: 11.10.2023
(73) Proprietor: Sandvik Mining and Construction Oy, 33330 Tampere (FI)
(72) Inventor: JUNTUNEN, Raimo, 33311 Tampere (FI); VERHO, Samuli, 33311 Tampere (FI)
(74) Representative: Sandvik

(56) References cited:
- EP-B1- 0 989 015
- US-A1- 2003 126 933

## Description

### FIELD OF THE INVENTION

The present application relates generally to a trolley-assisted mining vehicle. More specifically, the present application relates to contact force controlling in the trolley-assisted mining vehicle.

### BACKGROUND OF THE INVENTION

Trolley-assisted vehicles are used especially in public transport. Trolley-systems have been used to supply power for movable machines and vehicles also in underground mining. Some known trolley systems are disclosed in patent publications EP 0989015 B1 and US 2003/126933 A1. Capabilities of the trolley-systems to operate in a more optimal way may be however further improved.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

Example embodiments of the present disclosure enable keeping a contact force between a trolley-assisted mining vehicle and a trolley line at wanted level regardless of whether the trolley-assisted mining vehicle travels uphill or downhill. This and other benefits may be achieved by the features of the independent claims. Further advantageous implementation forms are provided in the dependent claims, the description, and the drawings.

According to a first aspect, an actuator arrangement for a trolley-assisted mining vehicle is disclosed. The actuator arrangement may comprise at least one trolley pole, wherein a trolley pole may comprise a proximal end and a distal end, wherein the trolley pole may be arranged from the proximal end to a support arrangement, and the distal end of the trolley pole may comprise a slide configured to feed in electrical energy from a trolley line to and/or from the trolley-assisted mining vehicle; and at least one actuator, which may be configured to raise and lower the trolley pole and to press the slide against the trolley line to form a contact force between the slide and the trolley line; wherein the contact force may be configured to be maintained inside a target range by increasing or decreasing pressure or power of the at least one actuator. This means that only one actuator may move the trolley pole up and down. Also the actuator may be used to maintain a constant sliding contact between the slide and the trolley line when the trolley-assisted mining vehicle is connected to the trolley line. The actuator arrangement comprises a controller configured to control the contact force of the at least one slide based on pressure or power information received from the at least one actuator. The controller is coupled to at least one inclinometer of the mining vehicle configured to determine a ramp angle (ε) in relation to flat terrain, so that the contact force may be controlled based on pressure or power information received from the at least one actuator and according to the ramp angle to keep the contact force inside the target range, such that if the ramp angle is more than 0° the pressure or power of the at least one actuator is configured to be increased to increase the contact force, and if the ramp angle is less than 0° the pressure or power of the at least one actuator is configured to be decreased to decrease the contact force.

When the trolley-assisted mining vehicle travels up, gravitational pull may decrease the contact force and while going down, the contact force may be increased. Poor road conditions in mining environment may cause much variation in the ride height of the slides. When the pressure or power of the actuator is known the contact force may be controlled accurately according to the ramp angle by controlling the pressure or power of the actuator. The contact force may be kept inside the target range regardless of whether the machine travels uphill or downhill. The contact may be kept even in bad road conditions as the actuator may react automatically to changes i.e. pits and bumps of the road. Due to the asymmetric pits or bumps, the trolley-assisted mining vehicle may oscillate laterally. The adjustable actuator arrangement may compensate for lateral movements or swinging better than a normal spring lift because it may react more closely to changes in both directions when the spring lift may only lift.

According to an example embodiment of the first aspect, the at least one actuator may be an electrically, pneumatically, or hydraulically operated actuating device. This allows various actuators to be used for moving the trolley pole up and down. With the hydraulic or pneumatic actuator, the pressure may be directly proportional to the power.

According to an example embodiment of the first aspect, the pressure or power of the at least one actuator may be directly proportional to the contact force; and the contact force may be configured to be maintained inside the target range by increasing or decreasing the pressure or power of the at least one actuator. When the pressure or power of the actuator is known the contact force may be controlled by adjusting the pressure or power of the actuator and therefore additional sensors are not needed for measuring the contact force. The pressure or power may be used to determine the required contact force to maintain a constant sliding contact between the slide and the trolley line. The trolley-assisted mining vehicles may comprise shorter trolley poles, for example about 2-4 m, preferably about 3 m. Longer trolley poles, such as 6-7 m long, may be used in busses. The shorter trolley poles may be stiffer making contact force estimation much easier.

According to an example embodiment of the first aspect, the target range may comprise a target minimum and a target maximum value for the contact force, wherein if the contact force is below the target minimum value the pressure or power of the at least one actuator may be configured to be increased; and if the contact force is above the target maximum value the pressure or power of the at least one actuator may be configured to be increased. When the contact force is inside the target range wear of the trolley lines may be decreased and maintenance interval for the trolley lines may be extended. Since ramps and roads in mines may not be completely smooth, it may not be worth trying to keep the contact force at one constant value but between the minimum and maximum values.

According to an example embodiment of the first aspect, the actuator arrangement may comprise the at least one actuator arranged on a first and/or a second side of the trolley pole. Hence, various amounts of the actuators located in different places may be used for moving the trolley pole up and down or doing other tasks for example, to help adjust the contact force, to provide accuracy, or to stabilize the movement of the trolley pole.

According to an example embodiment of the first aspect, one actuator may be arranged on the first side of the trolley pole; and one actuator may be arranged on the second side of the trolley pole. Actuators arranged on both sides of the trolley pole may give stability and more strength to the movement when the trolley pole is lifted or lowered.

According to an example embodiment of the first aspect, two actuators may be arranged on the first side of the trolley pole; and/or two actuators may be arranged on the second side of the trolley pole. Two actuators on one side of the trolley pole may give possibility to use two different actuators for different tasks, for example, one actuator may be used to move the slide up and down and the other actuator may be used to adjust the contact force.

According to an example embodiment of the first aspect, the at least one actuator may comprise a first end and a second end, wherein the at least one actuator may be configured to be movably arranged from the first end to the support arrangement or to a frame structure of the trolley-assisted mining vehicle; and/or the at least one actuator may be configured to be movably arranged from the second end to the trolley pole. An advantage of this is that the actuator may be moved and/or rotated at its one end or both ends at the same time as the trolley pole is turned. The actuator may have at least one contact point to the trolley pole.

According to an example embodiment of the first aspect, the at least one actuator may comprise a connecting element at the first and/or the second end, and wherein the connecting element may be a joint, a spring, compliant material, a compliant joint, or a compliant hinge. Various ways of connections may be used for connecting the actuator to the trolley pole, support arrangement, or frame structure of the trolley-assisted mining vehicle. Also, movable, compliant, and/or a flexible connection may be easily achieved by these.

According to an example embodiment of the first aspect, a length axis of the at least one actuator may be substantially parallel to a length axis of the trolley pole, and/or the length axis of the at least one actuator may be substantially perpendicular to a length axis of the trolley pole. Thus, different actuators may be used in different positions to give different effect when the trolley pole is lifted or lowered.

According to an example embodiment of the first aspect, the trolley pole may comprise an angular or straight form. The straight trolley pole may have simpler mechanics and may be easier to manufacture. However, the angled trolley pole may be used in situations where the actuator is placed below, on at least one side, and/or on top of the trolley pole, for example.

According to an example embodiment of the first aspect, the actuator arrangement may comprise a controller coupled to the at least one actuator, wherein the controller may be configured to control the contact force of the at least one slide based on pressure or power information received from the at least one actuator. The controller may be used to control rising and lowering of the trolley pole to keep the contact force constant between the current controller and the trolley line regardless of the road conditions.

According to an example embodiment of the first aspect, the controller may be configured to receive the pressure or power information from the at least one actuator; calculate an actual contact force from the received pressure or power information; compare the actual contact force to the contact force target range; and if the actual contact force is outside the target range, to increase or decrease the pressure or power of the at least one actuator to maintain the contact force inside the target range. The controller may calculate the present contact force from the pressure or power information and based on that the controller may increase or decrease the pressure or power of the at least one actuator. This may make the actuator arrangement very simple without the need for complex calculation and/or measuring systems.

According to a second aspect, a method for controlling a contact force with an actuator arrangement for a trolley-assisted mining vehicle is disclosed. The actuator arrangement may comprise at least one trolley pole, wherein a trolley pole may comprise a proximal end and a distal end, wherein the trolley pole may be arranged from the proximal end to a support arrangement; and the distal end of the trolley pole may comprise a slide, which may be configured to feed in electrical energy from a trolley line to and/or from the trolley-assisted mining vehicle; and at least one actuator; wherein the method may comprise raising and lowering the trolley pole by the at least one actuator; pressing the slide against the trolley line by the at least one actuator to form a contact force between the slide and the trolley line; and maintaining the contact force inside a target range by increasing or decreasing pressure or power of the at least one actuator. Only one actuator may be needed to move the trolley pole both up and down and to maintain a constant sliding contact between the slide and the trolley line when the trolley-assisted mining vehicle is connected to the trolley line.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 shows a simplified side view of a mining vehicle comprising an actuator arrangement in which examples of disclosed embodiments may be applied;
Figure 2 shows an example of a simplified view of the actuator arrangement from above;
Figure 3 shows an example of a simplified side view of the actuator arrangement;
Figure 4 shows another example of a simplified side view of the actuator arrangement;
Figure 5 shows a further example of a simplified side view of the actuator arrangement;
Figure 6 shows an example of forces effecting to a trolley pole;
Figure 7 shows another example of the forces effecting to the trolley pole;
Figure 8 shows a further example of the forces effecting to the trolley pole; and
Figure 9 shows an example method according to an example embodiment of the invention.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps or operations for constructing and operating the example. However, the same or equivalent functions and sequences may be accomplished by different examples.

According to the embodiment of the invention as defined in the claims, the trolley-assisted mining vehicle comprises an actuator arrangement and a working machine. The working machine may be a mining vehicle or an underground mining vehicle, for example, a dump truck, a load haul dump (LHD) vehicle, a drill rig, a development drill, a drilling machine, a bolting or reinforcing vehicle, a rock removal machine, a longhole drill rig, an explosive charging machine, a loader, a transport vehicle, a loading or hauling machine, setting vehicles of gallery arcs or nets, a shotcrete machine, a crusher, or a measuring vehicle. The trolley-assisted mining vehicle may be powered by a trolley line when the trolley-assisted mining vehicle is coupled to the trolley line and by a power source of the mining vehicle when the mining vehicle is decoupled from the trolley line. Correspondingly, the trolley-assisted mining vehicle may be configured for coupling to and decoupling from the trolley line during operation of the trolley-assisted mining vehicle. The coupling may refer to attachment of the trolley-assisted mining vehicle to the trolley line for transferring power from the trolley line to or from the mining vehicle. Correspondingly, decoupling may refer to detachment of the trolley-assisted mining vehicle from the trolley line. It should be understood that the trolley-assisted mining vehicle may be configured for being powered by the power source even when the mining vehicle is coupled to the trolley line, fully or partially. Additionally or alternatively, the trolley-assisted mining vehicle may be configured for an energy storage, such as a battery, of the power source being charged from the trolley line when the trolley-assisted mining vehicle is coupled to the trolley line.

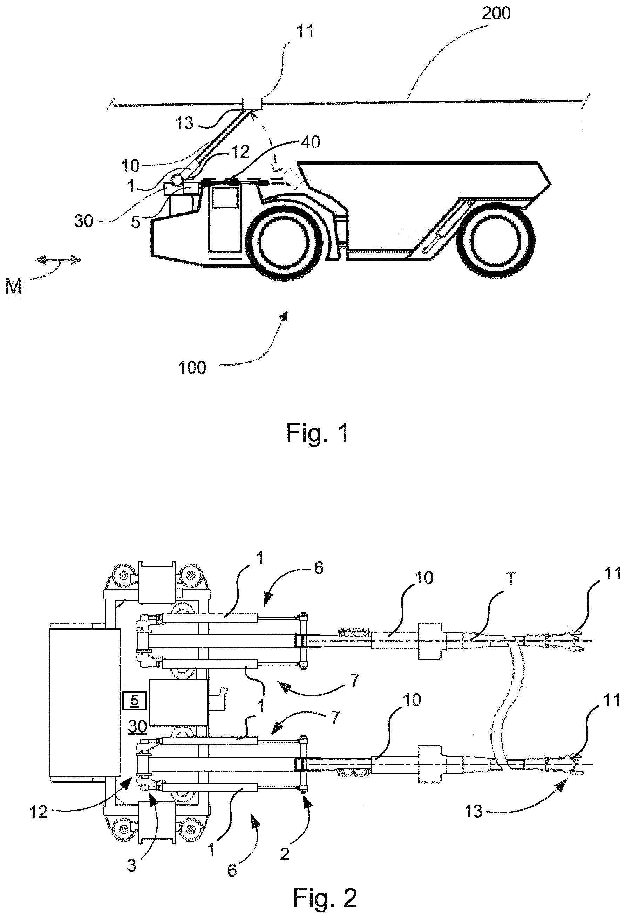

Figure 1 depicts example of a simplified trolley assisted mining vehicle 100 only showing some elements and functional entities, whose implementation may differ from what is shown. It is apparent to a person skilled in the art that the trolley-assisted mining vehicle 100 may comprise also other functions and structures than those shown in Figure 1.

The embodiments are not, however, restricted to the trolley assisted mining vehicle 100 given as an example but a person skilled in the art may apply the solution to other trolley-assisted mining vehicles provided with necessary properties.

The example of Figure 1 shows a simplified side view of the trolley assisted mining vehicle 100 comprising an actuator arrangement. Any functionality disclosed herein may also be applied as a method.

According to an example embodiment, the trolley-assisted mining vehicle 100 comprises an actuator arrangement. The mining vehicle 100 may be arranged to receive current from trolley lines 200, arranged at a set distance from each other and a distance from the vehicle 100. The actuator arrangement may be arranged to the trolley-assisted mining vehicle 100. The actuator arrangement may comprise at least one trolley pole 10. A trolley pole 10 may comprise a proximal end 12 and a distal end 13. The trolley pole 10 may be arranged from the proximal end 12 to a support arrangement 30, and the distal end 13 of the trolley pole 10 may comprise a slide 11 configured to feed in electrical energy from a trolley line 200 to and/or from the trolley-assisted mining vehicle 100. The actuator arrangement may further comprise at least one actuator 1 which may be configured to raise and lower the trolley pole 10 and to press the slide 11 against the trolley line 200 to form a contact force F₁,F₂,F₃ between the slide 11 and the trolley line 200. The contact force F₁,F₂,F₃ may be configured to be maintained inside a target range by increasing or decreasing pressure or power of the at least one actuator 1. The actuator 1 may be arranged for moving the trolley pole 10 between a first position in which the slide 11 may be in contact with the trolley line 200, and a second position in which the slide may not be in contact with the trolley line 200. In an example embodiment illustrated in figure 1 the trolley-assisted mining vehicle 100 comprises two trolley poles 10, which are in the first position connected to the trolley line 200 (i.e., upper position). In the first position the slides 11 of each trolley pole 10 may be in contact with the respective trolley lines 200. The second position (i.e., lowered position) of the trolley poles 10 is illustrated with dashed lines in Figure 1. The trolley poles 10 may be lowered by the at least one actuator 1, for example, by turning the trolley poles 10 around an axis that is in a horizontal cross direction with a main moving direction M of the mining vehicle 100.

According to an example embodiment the at least one actuator 1 may comprise an electrically, pneumatically, or hydraulically operated actuating device, which may be used for moving trolley poles 10, for example from an upper position to a lower position.

Figure 2 shows an example of a simplified view of an actuator arrangement from above. The trolley-assisted mining vehicle 100 according to figure 1 may comprise the actuator arrangement of figure 1. According to an example embodiment the actuator arrangement may comprises at least one actuator 1arranged on a first and/or a second side 6,7 of a trolley pole 10. This means that there may be one or more actuators 1 on both sides 6,7 of the actuator 1 or one or more actuators 1 only on one side 6,7 of the trolley pole 10. It may also be possible that at least one actuator 1 may be located above or below the trolley pole 10. An example of figure 2 shows that there are two trolley poles 10 and for each one actuator 1 is arranged on the first side 6 of the trolley pole 10 and one actuator 1 is arranged on the second side 7 of the trolley pole 10. Attaching more than one actuator to the trolley pole may give stability and more strength to the movement when the trolley pole 10 is lifted or lowered.

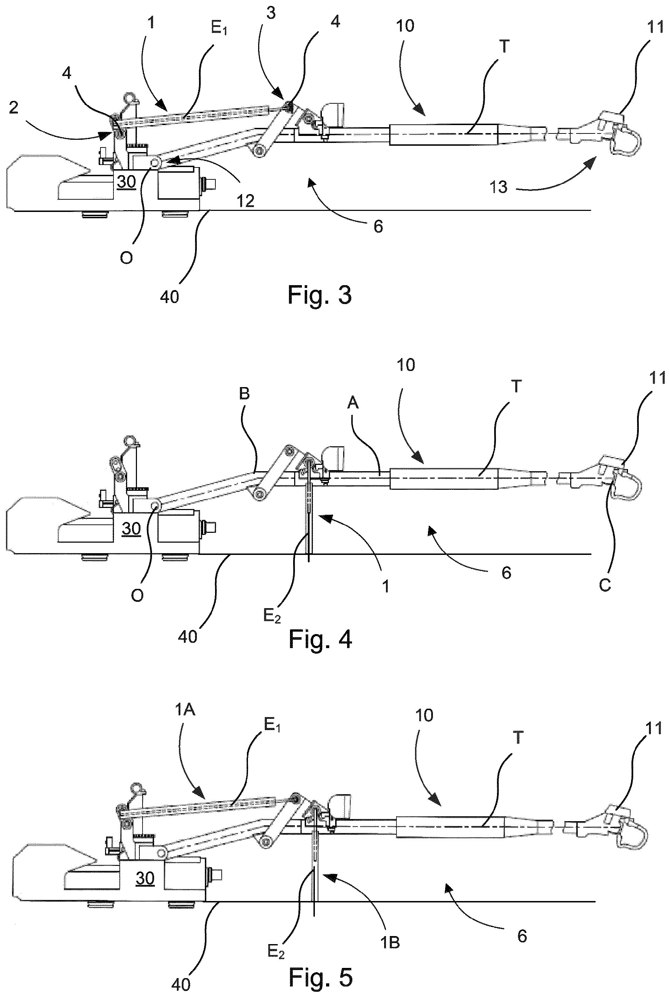

Figures 3 to 5 show examples of a simplified side views of an actuator arrangement, wherein actuators 1,1A,1B may be located in different places around a trolley pole 10. The actuator 1,1A,1B may be arranged on a lower portion of the trolley pole 10. According to an example embodiment at least one actuator 1,1A,1B may comprise a first end 2 and a second end 3. The at least one actuator 1,1A,1B may be configured to be movably arranged from the first end 2 to a support arrangement 30 or to a frame structure 40 of a trolley-assisted mining vehicle 100. According to an example embodiment the at least one actuator 1,1A,1B may be configured to be movably arranged from the second end 3 to the trolley pole 10. This way the actuator 1,1A,1B may be moved and/or rotated from its one end or both ends at the same time as the trolley pole 10 is turned. The actuator 1,1A,1B may always have only one contact point to the trolley pole 10. The length of the actuator 1,1A,1B may be about one third of the length of the trolley pole 10, for example.

According to an example embodiment, the at least one actuator 1,1A,1B may comprises a connecting element 4 at the first and/or the second end 2,3. The connecting element 4 is for example, a joint, a spring, compliant material, a compliant joint, or a compliant hinge. The movable, compliant and/or a flexible connecting element 4 may make it easy to attach the actuator 1,1A,1B and also use it.

An example of figure 3 shows only one actuator 1 attached on the first side 6 of the trolley pole 10. There may also be another actuator 1 attached on the second side 7 of the trolley pole 10 at the corresponding or different position. The actuator 1 may be attached from the first end 2 to the support arrangement 30 and from the second end 3 to the trolley pole 10. The actuator 1 may be substantially parallel to the trolley pole 10.

An example of figure 4 shows only one actuator 1 attached on the first side 6 of the trolley pole 10. There may also be another actuator 1 attached on the second side 7 of the trolley pole 10 at the corresponding or different position. The actuator 1 may be attached from the first end 2 to the frame structure 40 and from the second end 3 to the trolley pole 10. This actuator may be substantially perpendicular to the trolley pole 10.

An example of figure 5 shows a first and second actuator 1A,1B attached on the first side 6 of the trolley pole 10. There may also be a first and second actuator 1A, 1B attached on the second side 7 of the trolley pole 10 at the corresponding or different positions. The first actuator 1A may be attached from the first end 2 to the support arrangement 30 and from the second end 3 to the trolley pole 10. The first actuator 1A may be substantially parallel to the trolley pole 10. The second actuator 1B may be attached from the first end 2 to the frame structure 40 and from the second end 3 to the trolley pole 10. The second actuator 1B may be substantially perpendicular to the trolley pole 10. The first actuator 1A may be used to move the trolley pole 10 up and down and the second actuator 1B may be used to adjust the contact force F₁,F₂,F₃, for example.

According to an example embodiment, a length axis E₁ of the at least one actuator 1, 1A is substantially parallel to a length axis T of the trolley pole 10 and/or the length axis E₂ of the at least one actuator 1,1B is substantially perpendicular to a length axis T of the trolley pole 10. Actuators 1,1A,1B in different positions may give different effect when lifting or lowering the trolley pole 10.

According to an example embodiment, the trolley pole 10 comprises an angular or straight form. The trolley pole 10 of the examples of figures 3 to 5 have an angular form. The angled trolley pole 10 may be used when the actuator 1,1A is placed below, on at least one side 6,7, or on top of the trolley pole 10, for example. However, when the actuator 1,1B may be attached from the first end 2 to the frame structure 40 and from the second end 3 to the trolley pole 10 the form of the trolley pole 10 may also be straight, which may make manufacturing easier.

According to an example embodiment, the actuator 1,1A,1B may be used to control both raising and lowering of a slide 11. Pressure or power of at least one actuator 1,1A,1B may be directly proportional to a contact force F₁,F₂,F₃. By controlling the pressure or power, a contact force F₁,F₂,F₃ may be controlled accurately according to a ramp angle . Thus, the contact force F₁,F₂,F₃ may be kept at wanted level regardless of whether a trolley-assisted mining vehicle 100 travels uphill or downhill. With appropriate contact force F₁,F₂,F₃, wear of a trolley line 200 may be decreased. Also, possibility to adjust the contract force F₁,F₂,F₃ may give a suitable maintenance interval for the trolley lines 200. A contact between the trolley-assisted mining vehicle 100 and the trolley line 200 may be kept even in bad road conditions as the actuator 1,1A,1B may react automatically to changes. When the trolley-assisted mining vehicle 100 drives into a pit, the actuator 1,1A,1B may raise the trolley pole 10 to keep the correct pressure or power and the contact force F₁,F₂,F₃. When the trolley-assisted mining vehicle 100 drives over a bump, the actuator 1,1A,1B may lower the trolley pole 10 to keep the correct pressure or power and the contact force F₁,F₂,F₃.

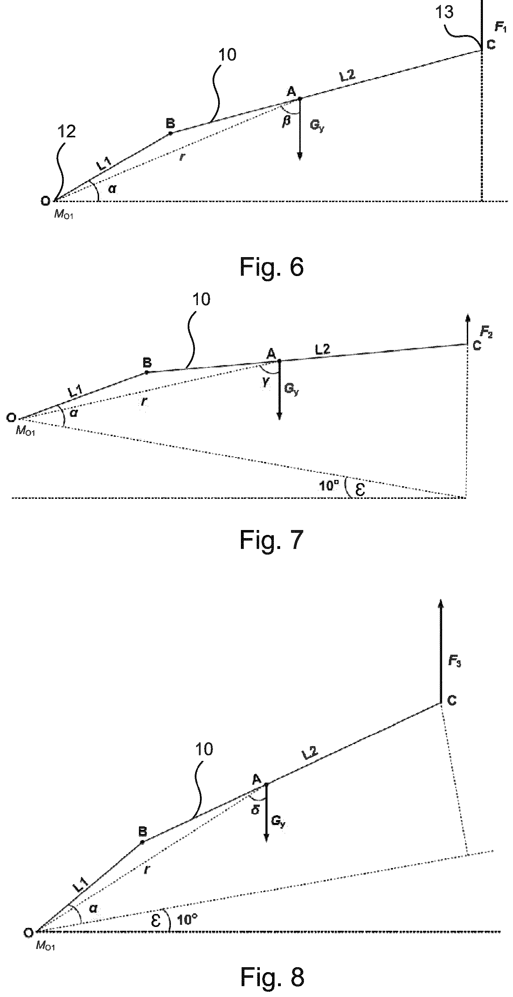

An example of figures 6 to 8 show how different forces effect to a trolley pole 10. An example of Figure 6 shows the trolley pole 10 of a trolley-assisted mining vehicle 100, wherein the mining vehicle 100 drives on a flat terrain. First point A is a trolley pole mass centre. Second point B is a point between a fourth and third point O,C. The second point B may also be a point where the trolley pole 10 may have an angle if the trolley pole has an angular and not a straight form. The third point C is a point at a distal end 13 of the trolley pole 10, where a slide 11 may be located and where a contact force F₁ acts. The fourth point O is a joint at the proximal end 12 of the trolley pole 10 for the trolley pole 10 turning. Length L1 is a length between the fourth point O and the second point B. Length L2 is a length between the second point B and the third point C. Length L1 is between 400-500 mm and length L2 is between 2500-3000 mm, for example. Gravitational pull from the point A may cause a gravitational force *G*_{y}, which may generate proximal end torque *M*_{O1} at the fourth point O. The proximal end torque *M*_{O1} may be opposite to that torque, which may be created by the actuator 1,1A,1B for the slide 11 and it may decrease the contact force F₁,F₂,F₃ at the end of the trolley pole 10.

According to an example embodiment, the pressure or power of at least one actuator 1,1A,1B is directly proportional to a contact force F₁,F₂,F₃, and the contact force F₁,F₂,F₃ is configured to be maintained inside a target range by increasing or decreasing the pressure or power of the at least one actuator 1,1A,1B. The pressure or power of the at least one actuator 1,1A,1B may be used to determine the required contact force F₁,F₂,F₃ to maintain a constant sliding contact between the slide 11 and a trolley line 200.

An example of Figure 7 shows the trolley pole 10 of the trolley-assisted mining vehicle 100, wherein the mining vehicle 100 drives uphill. Travelling uphill may increase a gravitational angle γ between an arm of a force *r* and the gravitational pull *G*_{y}. This may lead to the greater proximal end torque *M*_{O1} at the fourth point O causing a decreased contact force *F*₂.

An example of Figure 8 shows the trolley pole 10 of the trolley-assisted mining vehicle 100, wherein the mining vehicle 100 drives downhill. Travelling downhill may decrease a gravitational angle δ between the arm of the force *r* and the gravitational pull *G*_{y}. This may lead to the lower proximal end torque *M*_{O1} at the fourth point O causing an increased contact force *F*₃. According to an example embodiment, change in the contact force F₁,F₂,F₃ with 10 deg a ramp angle (17 % ramp) may be +20 % in downhill and -20 % in uphill.

The contact force F₁,F₂,F₃ may be maintained inside a target range by increasing or decreasing pressure or power of the at least one actuator 1,1A,1B. According to an example embodiment the target range comprises a target minimum and a target maximum value for the contact force F₁,F₂,F₃. If the contact force F₁,F₂,F₃ is below the target minimum value the pressure or power of the at least one actuator 1,1A,1B may be configured to be increased. If the contact force F₁,F₂,F₃ is above the target maximum value the pressure or power of the at least one actuator 1,1A,1B may be configured to be increased. When the contact force F₁,F₂,F₃ is inside the target range wear of the trolley lines 200 may be decreased.

According to an example embodiment the contact force F₁,F₂,F₃ is further configured to be controlled according to the ramp angle to keep the contact force F₁,F₂,F₃ inside the target range. If the ramp angle is > 0° the pressure or power of the at least one actuator F₁,F₂,F₃ may be configured to be increased to increase the contact force F₁,F₂,F₃. If the ramp angle < 0° the pressure or power of the at least one actuator 1,1A,1B may be configured to be decreased to decrease the contact force F₁,F₂,F₃. Thus, the contact force F₁,F₂,F₃ may be kept inside the target range regardless of whether the mining vehicle 100 travels uphill or downhill. The contact may be kept even in bad road conditions as the actuator 1,1A,1B may react automatically to changes i.e. pits and bumps of a road. The actuator arrangement or the mining vehicle 100 have at least one inclinometer to determine the ramp angle.

According to the invention the actuator arrangement comprises a controller 5 coupled to at least one actuator 1, 1A,1B. The controller 5 is also coupled to at least one inclinometer. The controller 5 controls a contact force F₁,F₂,F₃ of at least one slide 11 based on pressure or power information received from the at least one actuator 1,1A,1B. According to the invention the controller 5 is configured to control the contact force F₁,F₂,F₃ of the at least one slide 11 based on pressure or power information received from the at least one actuator 1,1A,1B and based on tilt information received from the at least one inclinometer. Thus, the controller 5 controls the contact force F₁,F₂,F₃ of all actuators 1,1A,1B of all trolley poles 10 at the same time. The controller 5 takes care that the contact force F₁,F₂,F₃ is inside the target force. The controller 5 may be the vehicle controller 5 of the mining vehicle 100. The controller 5 may comprise one or more processors. It may also comprise one or more memories and computer program code for performing any of the applicable operations disclosed herein. The controller 5 may further comprise a communication interface configured to enable the apparatus to send and/or receive information wired or wirelessly.

The controller 5 as described above may be implemented in software, hardware, application logic or a combination of software, hardware and application logic. The application logic, software or instruction set may be maintained on any one of various conventional computer-readable media. A "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The examples can store information relating to various processes described herein. This information can be stored in one or more memories, such as a hard disk, optical disk, magnetooptical disk, RAM, and the like. One or more databases can store the information used to implement the embodiments. The databases can be organized using data structures (e.g., records, tables, arrays, fields, graphs, trees, lists, and the like) included in one or more memories or storage devices listed herein. The databases may be located on one or more devices comprising local and/or remote devices such as servers. The processes described with respect to the embodiments can include appropriate data structures for storing data collected and/or generated by the processes of the devices and subsystems of the embodiments in one or more databases.

The controller 5 may be implemented using one or more general purpose processors, microprocessors, digital signal processors, micro-controllers, and the like, programmed according to the teachings of the embodiments, as will be appreciated by those skilled in the computer and/or software art(s). Appropriate software can be readily prepared by programmers of ordinary skill based on the teachings of the embodiments, as will be appreciated by those skilled in the software art. In addition, the embodiments can be implemented by the preparation of application-specific integrated circuits or by interconnecting an appropriate network of conventional component circuits, as will be appreciated by those skilled in the electrical art(s). Thus, the embodiments are not limited to any specific combination of hardware and/or software.

According to the invention, the controller 5 is configured to receive the pressure or power information from the at least one actuator 1,1A,1B, calculate an actual contact force F₁,F₂,F₃ from the received pressure or power information, and compare the actual contact force F₁,F₂,F₃ to the contact force target range. According to the invention, the controller 5 is configured to receive the pressure or power information from the at least one actuator 1,1A,1B and the tilt information from the at least one inclinometer, calculate an actual contact force F₁,F₂,F₃ from the received pressure or power information and the tilt information, and compare the actual contact force F₁,F₂,F₃ to the contact force target range. If the actual contact force F₁,F₂,F₃ is outside the target range, the controller 5 is configured to increase or decrease the pressure or power of the at least one actuator 1,1A,1B to maintain the contact force F₁,F₂,F₃ inside the target range.

The mining vehicle has a controller 5 for maintaining the contact force within a definable target range. The controller 5 is connected to the actuator 1,1A,1B for receiving the actual value of the contact force F₁,F₂,F₃, designed to compare the actual value with the target range, and connected to the actuator 1,1A,1B. The actuator 1,1A,1B is designed to raise or lower the at least one trolley pole 10 depending on the result of the comparison.

Example embodiments of the present disclosure may thus enable that the contact force may always be kept within the target range, which ensures uninterrupted contact with little trolley line wear.

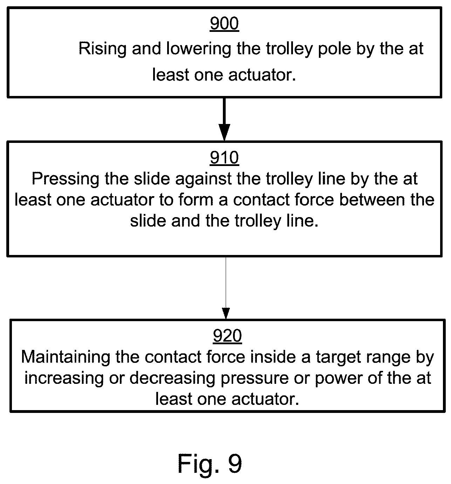

Figure 9 illustrates an example of a method for controlling a contact force F₁,F₂,F₃ with an actuator arrangement for a trolley-assisted mining vehicle 100. The actuator arrangement may comprise at least one trolley pole 10. The trolley pole 10 may comprise a proximal end 12 and a distal end 13. The trolley pole 10 may be arranged from the proximal end 12 to a support arrangement 30. The distal end 13 of the trolley pole 10 may comprise a slide 11 configured to feed in electrical energy from a trolley line 200 to and/or from the trolley-assisted mining vehicle 100. The actuator arrangement may further comprise at least one actuator.

At operation 900, the method may comprise raising and lowering the trolley pole 10 by the at least one actuator 1,1A,1B.

At operation 910, the method may comprise pressing the slide 11 against the trolley line 200 by the at least one actuator 1,1A,1B to form a contact force F₁,F₂,F₃ between the slide 11 and the trolley line 200.

At operation 920, the method may comprise maintaining the contact force F₁,F₂,F₃ inside a target range by increasing or decreasing pressure or power of the at least one actuator 1,1A,1B.

Further features of the method directly result from functionalities of, for example, the actuator arrangement. Different variations of the method may be also applied, as described in connection with the various example embodiments.

An actuator arrangement may be configured to perform or cause performance of any aspect of the method(s) described herein.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first', 'second', or 'third' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of the appended claims.

## Claims

1. An actuator arrangement for a trolley-assisted mining vehicle (100), the actuator arrangement comprising
at least one trolley pole (10), wherein a trolley pole (10) comprises a proximal end (12) and a distal end (13), wherein the trolley pole (10) is arranged from the proximal end (12) to a support arrangement (30), and the distal end (13) of the trolley pole (10) comprises a slide (11) configured to feed in electrical energy from a trolley line (200) to and/or from the trolley-assisted mining vehicle;
at least one actuator (1,1A,1B) configured to raise and lower the trolley pole (10) and to press the slide (11) against the trolley line (200) to form a contact force (F₁, F₂, F₃) between the slide (11) and the trolley line (200); and
a controller (5) coupled to the at least one actuator (1,1A,1B) and configured to control the contact force (F₁, F₂, F₃) of the at least one slide (11) based on pressure or power information received from the at least one actuator (1,1A,1B); wherein
the contact force (F₁, F₂, F₃) is configured to be maintained inside a target range by increasing or decreasing pressure or power of the at least one actuator (1,1A,1B);
**characterized in that**
the controller (5) is further coupled to at least one inclinometer of the mining vehicle (100) configured to determine a ramp angle (ε) in relation to flat terrain; and
the controller (5) is configured to control the contact force (F₁,F₂,F₃) based on pressure or power information received from the at least one actuator (1,1A,1B) and according to the ramp angle (ε) to keep the contact force inside the target range, such that
if the ramp angle (ε) is more than 0° the pressure or power of the at least one actuator (1,1A,1B) is configured to be increased to increase the contact force (F₁, F₂, F₃); and
if the ramp angle (ε) is less than 0° the pressure or power of the at least one actuator (1,1A,1B) is configured to be decreased to decrease the contact force (F₁, F₂, F₃).

2. The actuator arrangement according to claim 1, wherein the at least one actuator (1,1A,1B) comprises an electrically, pneumatically, or hydraulically operated actuating device.

3. The actuator arrangement according to claim 1, wherein
the pressure or power of the at least one actuator (1,1A,1B) is directly proportional to the contact force (F₁, F₂, F₃); and
the contact force (F₁, F₂, F₃) is configured to be maintained inside the target range by increasing or decreasing the pressure or power of the at least one actuator (1,1A,1B).

4. The actuator arrangement according to any of claims 1-3, wherein the target range comprises a target minimum and a target maximum value for the contact force (F₁, F₂, F₃), wherein
if the contact force (F₁, F₂, F₃) is below the target minimum value the pressure or power of the at least one actuator (1,1A,1R) is configured to be increased; and
if the contact force (F₁, F₂, F₃) is above the target maximum value the pressure or power of the at least one actuator (1,1A,1R) is configured to be increased.

5. The actuator arrangement according to any of claims 1-4, wherein the actuator arrangement comprises the at least one actuator (1,1A,1B) arranged on a first and/or a second side (6,7) of the trolley pole (10).

6. The actuator arrangement according to any of claims 1-5, wherein
one actuator (1,1A,1B) is arranged on the first side (6) of the trolley pole (10); and
one actuator (1,1A,1B) is arranged on the second side (7) of the trolley pole (10).

7. The actuator arrangement according to any of claims 1-5, wherein the actuator arrangement comprises at least two actuators (1,1A,1B), and wherein
two actuators (1,1A,1B) are arranged on the first side (6) of the trolley pole (10); and/or
two actuators (1,1A,1B) are arranged on the second side (7) of the trolley pole (10).

8. The actuator arrangement according to any of claims 1-7, wherein the at least one actuator (1,1A,1B) comprises a first end (2) and a second end (3), and wherein
the at least one actuator (1,1A,1B) is configured to be movably arranged from the first end (2) to the support arrangement (30) or to a frame structure (40) of the trolley-assisted mining vehicle (100); and/or
the at least one actuator (1,1A,1B) is configured to be movably arranged from the second end (3) to the trolley pole (10).

9. The actuator arrangement according to claim 8, wherein the at least one actuator (1,1A,1B) comprises a connecting element (4) at the first and/or the second end (2,3), and wherein the connecting element (4) is a joint, a spring, compliant material, a compliant joint, or a compliant hinge.

10. The actuator arrangement according to any of claims 1-9, wherein a length axis (E₁) of the at least one actuator (1,1A) is substantially parallel to a length axis (T) of the trolley pole (10), and/or the length axis (E₂) of the at least one actuator (1,1B) is substantially perpendicular to a length axis (T) of the trolley pole (10).

11. The actuator arrangement according to any of claims 1-10, wherein the trolley pole (10) comprises an angular or straight form.

12. The actuator arrangement according to any of claims 3-11, wherein the controller (5) is configured to
receive the pressure or power information from the at least one actuator (1,1A,1B);
calculate an actual contact force from the received pressure or power information;
compare the actual contact force to the contact force target range; and
if the actual contact force is outside the target range, to increase or decrease the pressure or power of the at least one actuator (1,1A,1R) to maintain the contact force inside the target range.

13. A method for controlling a contact force (F₁, F₂, F₃) with an actuator arrangement for a trolley-assisted mining vehicle (100), wherein the actuator arrangement comprises
at least one trolley pole (10), wherein a trolley pole (10) comprises a proximal end (12) and a distal end (13), wherein the trolley pole (10) is arranged from the proximal end (12) to a support arrangement (30); and the distal end (13) of the trolley pole (10) comprises a slide (11) configured to feed in electrical energy from a trolley line (200) to and/or from the trolley-assisted mining vehicle (100);
at least one actuator (1,1A,1B); and
a controller (5) coupled to the at least one actuator (1,1A,1B) and configured to control the contact force (F₁, F₂, F₃) of the at least one slide (11) based on pressure or power information received from the at least one actuator (1,1A,1B);
the method comprising:
raising and lowering the trolley pole (10) by the at least one actuator (1,1A,1B);
pressing the slide (11) against the trolley line (200) by the at least one actuator (1,1A,1B) to form a contact force (F₁, F₂, F₃) between the slide (11) and the trolley line (200); and
maintaining the contact force (F₁, F₂, F₃) inside a target range by increasing or decreasing pressure or power of the at least one actuator (1,1A,1B);
**characterized in that**
the controller (5) is further coupled to at least one inclinometer of the mining vehicle (100) configured to determine a ramp angle (ε) in relation to flat terrain; and
the method further comprises controlling the contact force (F₁,F₂,F₃) based on pressure or power information received from the at least one actuator (1,1A,1B) and according to the ramp angle (ε) to keep the contact force inside the target range, such that
if the ramp angle (ε) is more than 0° the pressure or power of the at least one actuator (1,1A,1R) is configured to be increased to increase the contact force (F₁, F₂, F₃); and
if the ramp angle (ε) is less than 0° the pressure or power of the at least one actuator (1,1A,1B) is configured to be decreased to decrease the contact force (F₁, F₂, F₃).

## Patentansprüche

1. Betätigungsvorrichtungsanordnung für ein oberleitungsgestütztes Bergbaufahrzeug (100), wobei die Betätigungsvorrichtungsanordnung Folgendes umfasst:
mindestens eine Stromabnehmerstange (10), wobei eine Stromabnehmerstange (10) ein proximales Ende (12) und ein distales Ende (13) umfasst, wobei die Stromabnehmerstange (10) vom proximalen Ende (12) bis zu einer Stützanordnung (30) angeordnet ist und das distale Ende (13) der Stromabnehmerstange (10) einen Schlitten (11) umfasst, der dazu konfiguriert ist, elektrische Energie von einer Oberleitung (200) in und/oder vom oberleitungsgestützten Bergbaufahrzeug einzuspeisen;
mindestens eine Betätigungsvorrichtung (1, 1A, 1B), die dazu konfiguriert ist, die Stromabnehmerstange (10) anzuheben und abzusenken und den Schlitten (11) gegen die Oberleitung (200) zu drücken, um eine Kontaktkraft (F₁, F₂, F₃) zwischen dem Schlitten (11) und der Oberleitung (200) zu bilden; und
eine Steuereinheit (5), die mit der mindestens einen Betätigungsvorrichtung (1, 1A, 1B) gekoppelt ist und dazu konfiguriert ist, die Kontaktkraft (F₁, F₂, F₃) des mindestens einen Schlittens (11) basierend auf Druck- oder Leistungsinformationen, die von der mindestens einen Betätigungsvorrichtung (1, 1A, 1B) empfangen werden, zu steuern; wobei
die Kontaktkraft (F₁, F₂, F₃) so konfiguriert ist, dass sie durch Erhöhen oder Verringern des Drucks oder der Leistung der mindestens einen Betätigungsvorrichtung (1, 1A, 1B) innerhalb eines Zielbereichs gehalten wird;
**dadurch gekennzeichnet, dass**
die Steuereinheit (5) weiter mit mindestens einem Neigungsmesser des Bergbaufahrzeugs (100) gekoppelt ist, der dazu konfiguriert ist, einen Rampenwinkel (ε) in Bezug auf flaches Gelände zu bestimmen; und
die Steuereinheit (5) dazu konfiguriert ist, die Kontaktkraft (F₁, F₂, F₃) basierend auf Druck- oder Leistungsinformationen, die von der mindestens einen Betätigungsvorrichtung (1, 1A, 1B) empfangen werden, und entsprechend dem Rampenwinkel (ε) zu steuern, um die Kontaktkraft innerhalb des Zielbereichs zu halten, so dass
wenn der Rampenwinkel (ε) größer als 0° ist, der Druck oder die Leistung der mindestens einen Betätigungsvorrichtung (1, 1A, 1B) dazu konfiguriert ist, erhöht zu werden, um die Kontaktkraft (F₁, F₂, F₃) zu erhöhen; und
wenn der Rampenwinkel (ε) kleiner als 0° ist, der Druck oder die Leistung der mindestens einen Betätigungsvorrichtung (1, 1A, 1B) dazu konfiguriert ist, verringert zu werden, um die Kontaktkraft (F₁, F₂, F₃) zu verringern.

2. Betätigungsvorrichtungsanordnung nach Anspruch 1, wobei die mindestens eine Betätigungsvorrichtung (1, 1A, 1B) eine elektrisch, pneumatisch oder hydraulisch betriebene Betätigungsvorrichtung umfasst.

3. Betätigungsvorrichtungsanordnung nach Anspruch 1, wobei
der Druck bzw. die Leistung der mindestens einen Betätigungsvorrichtung (1, 1A, 1B) direkt proportional zur Kontaktkraft (F₁, F₂, F₃) ist; und
die Kontaktkraft (F₁, F₂, F₃) dazu konfiguriert, durch Erhöhen oder Verringern des Drucks oder der Leistung der mindestens einen Betätigungsvorrichtung (1, 1A, 1B) innerhalb des Zielbereichs gehalten zu werden.

4. Betätigungsvorrichtungsanordnung nach einem der Ansprüche 1-3, wobei der Zielbereich einen Zielmindest- und einen Zielhöchstwert für die Kontaktkraft (F₁, F₂, F₃) umfasst, wobei
wenn die Kontaktkraft (F₁, F₂, F₃) unter dem Zielmindestwert liegt, der Druck oder die Leistung der mindestens einen Betätigungsvorrichtung (1, 1A, 1B) dazu konfiguriert ist, erhöht zu werden; und
wenn die Kontaktkraft (F₁, F₂, F₃) über dem Zielhöchstwert liegt, der Druck oder die Leistung der mindestens einen Betätigungsvorrichtung (1, 1A, 1B) dazu konfiguriert ist, erhöht zu werden.

5. Betätigungsvorrichtungsanordnung nach einem der Ansprüche 1-4, wobei die Betätigungsvorrichtungsanordnung die mindestens eine Betätigungsvorrichtung (1, 1A, 1B) umfasst, die an einer ersten und/oder einer zweiten Seite (6, 7) der Stromabnehmerstange (10) angeordnet ist.

6. Betätigungsvorrichtungsanordnung nach einem der Ansprüche 1-5, wobei
eine Betätigungsvorrichtung (1, 1A, 1B) an der ersten Seite (6) der Stromabnehmerstange (10) angeordnet ist; und
eine Betätigungsvorrichtung (1, 1A, 1B) an der zweiten Seite (7) der Stromabnehmerstange (10) angeordnet ist.

7. Betätigungsvorrichtungsanordnung nach einem der Ansprüche 1-5, wobei die Betätigungsvorrichtungsanordnung mindestens zwei Betätigungsvorrichtungen (1, 1A, 1B) umfasst, und wobei
zwei Betätigungsvorrichtungen (1, 1A, 1B) an der ersten Seite (6) der Stromabnehmerstange (10) angeordnet sind; und/oder
zwei Betätigungsvorrichtungen (1, 1A, 1B) an der zweiten Seite (7) der Stromabnehmerstange (10) angeordnet sind.

8. Betätigungsvorrichtungsanordnung nach einem der Ansprüche 1-7, wobei die mindestens eine Betätigungsvorrichtung (1, 1A, 1B) ein erstes Ende (2) und ein zweites Ende (3) umfasst, und wobei
die mindestens eine Betätigungsvorrichtung (1, 1A, 1B) dazu konfiguriert ist, vom ersten Ende (2) aus zur Stützanordnung (30) oder zu einer Rahmenstruktur (40) des oberleitungsgestützten Bergbaufahrzeugs (100) beweglich angeordnet zu sein; und/oder
die mindestens eine Betätigungsvorrichtung (1, 1A, 1B) dazu konfiguriert ist, vom zweiten Ende (3) zur Stromabnehmerstange (10) beweglich angeordnet zu sein.

9. Betätigungsvorrichtungsanordnung nach Anspruch 8, wobei die mindestens eine Betätigungsvorrichtung (1, 1A, 1B) ein Verbindungselement (4) an dem ersten und/oder dem zweiten Ende (2, 3) umfasst und wobei das Verbindungselement (4) ein Gelenk, eine Feder, nachgiebiges Material, ein nachgiebiges Gelenk oder ein nachgiebiges Scharnier ist.

10. Betätigungsvorrichtungsanordnung nach einem der Ansprüche 1-9, wobei eine Längsachse (E₁) der mindestens einen Betätigungsvorrichtung (1, 1A) im Wesentlichen parallel zu einer Längsachse (T) der Stromabnehmerstange (10) ist und/oder die Längsachse (E₂) der mindestens einen Betätigungsvorrichtung (1, 1B) im Wesentlichen senkrecht zu einer Längsachse (T) der Stromabnehmerstange (10) ist.

11. Betätigungsvorrichtungsanordnung nach einem der Ansprüche 1-10, wobei die Stromabnehmerstange (10) eine eckige oder gerade Form umfasst.

12. Betätigungsvorrichtungsanordnung nach einem der Ansprüche 3-11, wobei die Steuereinheit (5) dazu konfiguriert ist,
die Druck- oder Leistungsinformationen von der mindestens einen Betätigungsvorrichtung (1, 1A, 1B) zu empfangen;
eine tatsächliche Kontaktkraft aus den empfangenen Druck- oder Leistungsinformationen zu berechnen;
die tatsächliche Kontaktkraft mit dem Zielbereich der Kontaktkraft zu vergleichen; und
wenn die tatsächliche Kontaktkraft außerhalb des Zielbereichs liegt, den Druck oder die Leistung der mindestens einen Betätigungsvorrichtung (1, 1A, 1B) zu erhöhen oder zu verringern, um die Kontaktkraft innerhalb des Zielbereichs zu halten.

13. Verfahren zum Steuern einer Kontaktkraft (F₁, F₂, F₃) mit einer Betätigungsvorrichtungsanordnung für ein oberleitungsgestütztes Bergbaufahrzeug (100), wobei die Betätigungsvorrichtungsanordnung Folgendes umfasst:
mindestens eine Stromabnehmerstange (10), wobei eine Stromabnehmerstange (10) ein proximales Ende (12) und ein distales Ende (13) umfasst, wobei die Stromabnehmerstange (10) vom proximalen Ende (12) bis zu einer Stützanordnung (30) angeordnet ist; und das distale Ende (13) der Stromabnehmerstange (10) einen Schlitten (11) umfasst, der dazu konfiguriert ist, elektrische Energie von einer Oberleitung (200) in und/oder vom oberleitungsgestützten Bergbaufahrzeug (100) einzuspeisen;
mindestens eine Betätigungsvorrichtung (1, 1A, 1B); und
eine Steuereinheit (5), die mit der mindestens einen Betätigungsvorrichtung (1, 1A, 1B) gekoppelt ist und dazu konfiguriert ist, die Kontaktkraft (F₁, F₂, F₃) des mindestens einen Schlittens (11) basierend auf Druck- oder Leistungsinformationen, die von der mindestens einen Betätigungsvorrichtung (1, 1A, 1B) empfangen werden, zu steuern;
wobei das Verfahren umfasst:
Anheben und Absenken der Stromabnehmerstange (10) durch die mindestens eine Betätigungsvorrichtung (1, 1A, 1B);
Drücken des Schlittens (11) gegen die Oberleitung (200) durch die mindestens eine Betätigungsvorrichtung (1, 1A, 1B), um eine Kontaktkraft (F₁, F₂, F₃) zwischen dem Schlitten (11) und der Oberleitung (200) zu bilden; und
Aufrechterhalten der Kontaktkraft (F₁, F₂, F₃) innerhalb eines Zielbereichs durch Erhöhen oder Verringern des Drucks oder der Leistung der mindestens einen Betätigungsvorrichtung (1, 1A, 1B); **dadurch gekennzeichnet, dass** die Steuereinheit (5) weiter mit mindestens einem Neigungsmesser des Bergbaufahrzeugs (100) gekoppelt ist, der dazu konfiguriert ist, einen Rampenwinkel (ε) in Bezug auf flaches Gelände zu bestimmen; und
wobei das Verfahren weiter Steuern der Kontaktkraft (F₁, F₂, F₃) basierend auf Druck- oder Leistungsinformationen, die von der mindestens einen Betätigungsvorrichtung (1, 1A, 1B) empfangen werden, und gemäß dem Rampenwinkel (ε) umfasst, um die Kontaktkraft innerhalb des Zielbereichs zu halten, so dass
wenn der Rampenwinkel (ε) größer als 0° ist, der Druck oder die Leistung der mindestens einen Betätigungsvorrichtung (1, 1A, 1B) dazu konfiguriert ist, erhöht zu werden, um die Kontaktkraft (F₁, F₂, F₃) zu erhöhen; und
wenn der Rampenwinkel (ε) kleiner als 0° ist, der Druck oder die Leistung der mindestens einen Betätigungsvorrichtung (1, 1A, 1B) dazu konfiguriert ist, verringert zu werden, um die Kontaktkraft (F₁, F₂, F₃) zu verringern.

## Revendications

1. Agencement d'actionneur pour un véhicule minier assisté par chariot (100), l'agencement d'actionneur comprenant
au moins une perche de chariot (10), dans lequel une perche de chariot (10) comprend une extrémité proximale (12) et une extrémité distale (13), dans lequel la perche de chariot (10) est agencée depuis l'extrémité proximale (12) vers un agencement de support (30), et l'extrémité distale (13) de la perche de chariot (10) comprend un frotteur (11) configuré pour apporter de l'énergie électrique depuis une ligne de chariot (200) vers et/ou depuis le véhicule minier assisté par chariot ;
au moins un actionneur (1, 1A, 1B) configuré pour lever et abaisser la perche de chariot (10) et pour presser le frotteur (11) contre la ligne de chariot (200) pour former une force de contact (F₁, F₂, F₃) entre le frotteur (11) et la ligne de chariot (200) ; et
un dispositif de commande (5) couplé à l'au moins un actionneur (1, 1A, 1B) et configuré pour commander la force de contact (F₁, F₂, F₃) de l'au moins un frotteur (11) sur la base d'informations de pression ou de puissance reçues de l'au moins un actionneur (1, 1A, 1B) ; dans lequel
la force de contact (F₁, F₂, F₃) est configurée pour être maintenue dans une plage cible en augmentant ou en diminuant la pression ou la puissance de l'au moins un actionneur (1, 1A, 1B) ;
**caractérisé en ce que**
le dispositif de commande (5) est en outre couplé à au moins un inclinomètre du véhicule minier (100) configuré pour déterminer un angle de rampe (ε) par rapport à un terrain plat ; et
le dispositif de commande (5) est configuré pour commander la force de contact (F₁, F₂, F₃) sur la base d'informations de pression ou de puissance reçues de l'au moins un actionneur (1, 1A, 1B) et conformément à l'angle de rampe (ε) pour garder la force de contact dans la plage cible, de telle sorte que
si l'angle de rampe (ε) est supérieur à 0°, la pression ou la puissance de l'au moins un actionneur (1, 1A, 1B) est configurée pour être augmentée afin d'augmenter la force de contact (F₁, F₂, F₃) ; et
si l'angle de rampe (ε) est inférieur à 0°, la pression ou la puissance de l'au moins un actionneur (1, 1A, 1B) est configurée pour être diminuée afin de diminuer la force de contact (F₁, F₂, F₃).

2. Agencement d'actionneur selon la revendication 1, dans lequel l'au moins un actionneur (1, 1A, 1B) comprend un dispositif d'actionnement à commande électrique, pneumatique ou hydraulique.

3. Agencement d'actionneur selon la revendication 1, dans lequel
la pression ou la puissance de l'au moins un actionneur (1, 1A, 1B) est directement proportionnelle à la force de contact (F₁, F₂, F₃) ; et
la force de contact (F₁, F₂, F₃) est configurée pour être maintenue dans la plage cible en augmentant ou en diminuant la pression ou la puissance de l'au moins un actionneur (1, 1A, 1B).

4. Agencement d'actionneur selon l'une quelconque des revendications 1-3, dans lequel la plage cible comprend une valeur minimale cible et une valeur maximale cible pour la force de contact (F₁, F₂, F₃), dans lequel
si la force de contact (F₁, F₂, F₃) est inférieure à la valeur minimale cible, la pression ou la puissance de l'au moins un actionneur (1, 1A, 1B) est configurée pour être augmentée ; et
si la force de contact (F₁, F₂, F₃) est supérieure à la valeur maximale cible, la pression ou la puissance de l'au moins un actionneur (1, 1A, 1B) est configurée pour être augmentée.

5. Agencement d'actionneur selon l'une quelconque des revendications 1-4, dans lequel l'agencement d'actionneur comprend le au moins un actionneur (1, 1A, 1B) agencé sur un premier et/ou un second côté (6, 7) de la perche de chariot (10).

6. Agencement d'actionneur selon l'une quelconque des revendications 1-5, dans lequel
un actionneur (1, 1A, 1B) est agencé sur le premier côté (6) de la perche de chariot (10) ; et
un actionneur (1, 1A, 1B) est agencé sur le second côté (7) de la perche de chariot (10).

7. Agencement d'actionneur selon l'une quelconque des revendications 1-5, dans lequel l'agencement d'actionneur comprend au moins deux actionneurs (1, 1A, 1B), et dans lequel
deux actionneurs (1, 1A, 1B) sont agencés sur le premier côté (6) de la perche de chariot (10) ; et/ou
deux actionneurs (1, 1A, 1B) sont agencés sur le second côté (7) de la perche de chariot (10).

8. Agencement d'actionneur selon l'une quelconque des revendications 1-7, dans lequel le au moins un actionneur (1, 1A, 1B) comprend une première extrémité (2) et une seconde extrémité (3), et dans lequel
le au moins un actionneur (1, 1A, 1B) est configuré pour être agencé de manière mobile depuis de la première extrémité (2) vers l'agencement de support (30) ou vers une structure de châssis (40) du véhicule minier assisté par chariot (100) ; et/ou
le au moins un actionneur (1, 1A, 1B) est configuré pour être agencé de manière mobile depuis la seconde extrémité (3) vers la perche de chariot (10).

9. Agencement d'actionneur selon la revendication 8, dans lequel le au moins un actionneur (1, 1A, 1B) comprend un élément de liaison (4) au niveau de la première et/ou de la seconde extrémité (2, 3), et dans lequel l'élément de liaison (4) est un joint, un ressort, un matériau souple, un joint souple ou une charnière souple.

10. Agencement d'actionneur selon l'une quelconque des revendications 1-9, dans lequel un axe longitudinal (E₁) de l'au moins un actionneur (1, 1A) est sensiblement parallèle à un axe longitudinal (T) de la perche de chariot (10), et/ou l'axe longitudinal (E₂) de l'au moins un actionneur (1, 1B) est sensiblement perpendiculaire à un axe longitudinal (T) de la perche de chariot (10).

11. Agencement d'actionneur selon l'une quelconque des revendications 1-10, dans lequel la perche de chariot (10) comprend une forme angulaire ou droite.

12. Agencement d'actionneur selon l'une quelconque des revendications 3-11, dans lequel le dispositif de commande (5) est configuré pour
recevoir les informations de pression ou de puissance de l'au moins un actionneur (1, 1A, 1B) ;
calculer une force de contact réelle à partir des informations de pression ou de puissance reçues ;
comparer la force de contact réelle à la plage cible de force de contact ; et
si la force de contact réelle est en dehors de la plage cible, augmenter ou diminuer la pression ou la puissance de l'au moins un actionneur (1, 1A, 1B) pour maintenir la force de contact dans la plage cible.

13. Procédé de commande d'une force de contact (F₁, F₂, F₃) avec un agencement d'actionneur pour un véhicule minier assisté par chariot (100), dans lequel l'agencement d'actionneur comprend
au moins une perche de chariot (10), dans lequel une perche de chariot (10) comprend une extrémité proximale (12) et une extrémité distale (13), dans lequel la perche de chariot (10) est agencée depuis l'extrémité proximale (12) vers un agencement de support (30), et l'extrémité distale (13) de la perche de chariot (10) comprend un frotteur (11) configuré pour apporter de l'énergie électrique depuis une ligne de chariot (200) vers et/ou depuis le véhicule minier assisté par chariot (100) ;
au moins un actionneur (1, 1A, 1B) ; et
un dispositif de commande (5) couplé à l'au moins un actionneur (1, 1A, 1B) et configuré pour commander la force de contact (F₁, F₂, F₃) de l'au moins un frotteur (11) sur la base d'informations de pression ou de puissance reçues de l'au moins un actionneur (1, 1A, 1B) ;
le procédé comprenant :
le levage et l'abaissement de la perche de chariot (10) par l'au moins un actionneur (1, 1A, 1B) ;
le fait de presser le frotteur (11) contre la ligne de chariot (200) au moyen de l'au moins un actionneur (1, 1A, 1B) pour former une force de contact (F₁, F₂, F₃) entre le frotteur (11) et la ligne de chariot (200) ; et
le maintien de la force de contact (F₁, F₂, F₃) dans une plage cible en augmentant ou en diminuant la pression ou la puissance de l'au moins un actionneur (1, 1A, 1B) ; **caractérisé en ce que** le dispositif de commande (5) est en outre couplé à au moins un inclinomètre du véhicule minier (100) configuré pour déterminer un angle de rampe (ε) par rapport à un terrain plat ; et
le procédé comprend en outre la commande de la force de contact (F₁, F₂, F₃) sur la base d'informations de pression ou de puissance reçues de l'au moins un actionneur (1, 1A, 1B) et conformément à l'angle de rampe (ε) pour garder la force de contact dans la plage cible, de telle sorte que
si l'angle de rampe (ε) est supérieur à 0°, la pression ou la puissance de l'au moins un actionneur (1, 1A, 1B) est configurée pour être augmentée afin d'augmenter la force de contact (F₁, F₂, F₃) ; et
si l'angle de rampe (ε) est inférieur à 0°, la pression ou la puissance de l'au moins un actionneur (1, 1A, 1B) est configurée pour être diminuée afin de diminuer la force de contact (F₁, F₂, F₃).
